# EUROPEAN PATENT SPECIFICATION

(11) **EP 1 217 904 B1**
(45) Date of publication and mention of the grant of the patent: **07.09.2005**
(21) Application number: 00929428.1
(22) Date of filing: 18.04.2000
(51) Int. Cl.: A23L 1/304, A23L 2/52

(54) **BEVERAGES AND OTHER LIQUID FOOD PRODUCTS FORTIFIED WITH A CALCIUM MAGNESIUM LACTATE-CITRATE COMPLEX**
MIT EINEM CALCIUM MAGNESIUM LACTAT-CITRAT KOMPLEX ANGEREICHERTE GETRÄNKE UND ANDERE FLÜSSIGE LEBENSMITTEL
BOISSONS ET AUTRES ALIMENTS LIQUIDES ENRICHIS AVEC UN COMPLEX LACTATE-CITRATE DE CALCIUM ET MAGNESIUM

(30) Priority: 24.09.1999 US 405243
(43) Date of publication of application: 03.07.2002
(73) Proprietor: Société des Produits Nestlé S.A., 1800 Vevey (CH)
(72) Inventor: SHER, Alexander, Danbury, CT 06811 (US); VADEHRA, Dharam, Vir, New Milford, CT 06776 (US); MALLANGI, Chandrasekhara, Reddy, New Milford, CT 06776 (US); PANYAM, Dinakar, New Milford, CT 06776 (US)
(74) Representative: Thomas, Alain
(86) International application number: PCT/EP2000/003736
(87) International publication number: WO 2001/022838

(56) References cited:
- EP-A- 0 875 153
- WO-A-90/05713
- WO-A-96/31130
- WO-A-98/32344
- WO-A-99/51114
- PATENT ABSTRACTS OF JAPAN vol. 1997, no. 11, 28 November 1997 (1997-11-28) & JP 09 175994 A (ZERIA PHARMACEUT CO LTD), 8 July 1997 (1997-07-08) cited in the application
- DATABASE WPI Section Ch, Week 198033 Derwent Publications Ltd., London, GB; Class D13, AN 1980-57990C XP002144954 & JP 55 088685 A (IHOKI T), 4 July 1980 (1980-07-04) cited in the application

## Description

### FIELD OF INVENTION

The present invention relates to the fortification of water, juices and beverages with meta-stable Calcium-Magnesium Lactate-Citrate complexes optionally stabilized with carbohydrates.

### BACKGROUND OF THE INVENTION

Calcium, the most abundant mineral in body, is a major constituent of bone and teeth. This mineral also plays an important role in several physiological systems. Calcium is important for healthy bone and tooth development in the young and an adequate intake is essential. Calcium status may also be a factor in the development of osteoporosis in elderly people.

Since the body does not produce minerals, it is totally dependent on an external supply of calcium, nutritional or supplementary. The importance of adequate calcium intake is recognized during the whole life of the human being. In 1994, the NIH Consensus Development Panel revised recommended daily allowances for calcium intake for each age group from 800-1200 mg per day to 1500 mg per day.

It has been found that organic acids salts of calcium are more bioavailable in general than the inorganic salts. Calcium citrate has advantages over other calcium salts for use in fortified foods because of high bio-availability. Calcium citrate, as opposed to calcium in general, has only a marginal effect of interfering with the absorption of other minerals, especially iron. Also, long-term calcium supplementation with calcium lactate - citrate can reduce the risk of the formation of kidney and urinary stones since citrate ions are inhibitors of crystallization of stone-forming calcium salts.

Magnesium also plays an important role in the human organism. The adult body contains 20-28 g of magnesium, approximately 60% of which is present in the skeleton, 40% resides in the muscles and soft tissues and about 1% in the fluid.

Magnesium participates in numbers of biochemical and physiological processes such as biosynthesis, glycolysis, transmission of the genetic code, enzyme activation, etc. Further, extracellular magnesium is critical to the maintenance of electrical potential of nerve and muscle membranes and for transmission of impulses across neuromuscular junctions. The RDA for adults of both sexes is accepted to be 4.5 mg/kg, so 280 mg for women and 350 mg per day for men aged 19 and above (Recommended Dietary Allowances, National Academy Press, Washington, D.C., 1989, 10^{th} Edition).

Addition of calcium to water or clear beverages presents very significant problems. Firstly, if highly soluble sources of calcium (calcium chloride, etc.) are used, a high level of soluble calcium leads to undesirable flavour and destabilisation of proteins. Secondly, slightly soluble sources of calcium will not cause destabilisation of protein micelles but they will precipitate rapidly. Accordingly, the solubility of the calcium sources has to be balanced within a very small range of solubility.

Therefore, it would be highly desirable to have calcium-magnesium sources to fortify water, juices, beverages and other liquid food products without coagulation and sedimentation, with improved palatability, and without bitterness or off-flavor.

### SUMMARY OF THE PRIOR ART

J09175994 discloses an liquid calcium drink prepared by dissolving a calcium source, calcium carbonate or pulverized shell of oyster with malic and /or citric and lactic acid, particularly at ratios 1:1-20, followed by heating at 50 -100 degree C. The advantage is to supply calcium with improved taste.

DE4111040 describes fruit juice enriched with a mixture tri-potassium citrate, calcium lactate, magnesium gluconate and ferrous gluconate. The pH of the fruit juice is preferably adjusted to 4.3 with lemon or lime juices. The advantage is supply minerals which may be insufficient in the diet, in a drink, in a form with a pleasant taste.

J55088685 describes a health drink composition containing calcium lactate, amino acid-rich vinegar, and optionally lactic acid, citric acid and/or apple vinegar in aqueous alkaline solution. The composition includes 500-1000 mg of calcium lactate and 500-3000 mg of amino acid-rich vinegar in 100 ml of solution and has a pH of 3.6-3.8 and a sugar content 6.5-10%. Optionally, 150-500 mg of lactic acid, 150-500 mg of citric acid and/or 500-2000 mg of apple vinegar are also combined in 100 ml of solution. Citric acid, honey, perfume, etc. are optionally combined. By using calcium lactate and amino acid-rich vinegar, the drink contains 1200 ppm of calcium. It is stated that calcium ions are easily absorbed and the drink prevents blood acidification and various diseases and disorders caused by calcium deficiency.

Calcium and vitamin C containing beverages with improved color stability are described in US Patent 5,424,082. Stable nutritional vitamin and mineral supplemented beverages are described in US Patent 4,992,282.

WO 9951114 describes a metastable complex formed by the interaction of an insoluble calcium source and a solution of citric and lactic acids, and a fortified foodstuff comprising a fortifying amount of the metastable complex, as well as a process for its preparation.

WO 9832344 Discloses liquid beverages for supplementation of calcium in the diet. The invention resides in the fact that high levels of calcium can be supplied through the use of calcium glycerophosphate in a low pH (2.8 to 4.6) beverage.

WO 9631130 discloses calcium supplements in a solid form, a beverage concentrate or an additive in liquid or powder comprising a source of calcium, which is preferably calcium glycerophosphate, vitamin D, vegetable oil and a gum.

A majority of these patents do not address the issue of the quantities of these drinks required to get the daily recommended allowances of calcium and other nutrients from such preparations.

Such nutritional drinks also lack organoleptic properties for good consumer acceptance. Accepted calcium salts like calcium carbonate, calcium phosphate and calcium citrate for biological use tend to have very poor water solubility resulting in precipitation. Most soluble calcium salts have a very unpleasant bitter taste, while others (e.g., calcium glycero-phosphate) are very expensive or, such as calcium lactate, have very low calcium content.

Thus, there is a need for good tasting bottled water, juices and beverages with a sufficient amount of calcium to meet the US Daily Recommended Allowances.

### SUMMARY OF THE INVENTION

We have found that metastable Calcium Magnesium Lactate-Citrate complexes formed by the interaction of an alkaline calcium source such as calcium hydroxide, calcium oxide or calcium carbonate and an alkaliner magnesium source with a mixture of lactic and citric acids optionally stabilised with various carbohydrates such as sucrose, fructose, maltodextrins, corn syrup, etc. can be used to fortify carbonated and non-carbonated water, clear juices and low pH beverages which are stable at refrigeration, room and high temperature condition as well as withstanding freezing/thawing cycles without precipitation and changing organoleptic properties.

According to the present invention, there is provided a composition comprising fortified water, a juice or a low pH beverage and a fortifying amount of a metastable Calcium Magnesium Lactate-Citrate complex formed by the interaction of an alkaline calcium source and an alkaline magnesium source with a mixture of lactic and citric acids and having the formula of ${\text{[(Ca}}_{\text{x}} {\text{Mg}}_{\text{y}} {\text{)}}_{\text{p}} {\text{{}}^{\text{-}} {\text{OOC - CH}}_{\text{2}} {\text{- C(OH)(COO}}^{\text{-}} {\text{) - CH}}_{\text{2}} {\text{- COO}}^{\text{-}} {\text{}}}_{\text{q}} {\text{{CH}}_{\text{3}} \text{- CH(OH) -} {\text{COO}}^{\text{-}} {\text{}}}_{\text{r}} \text{],}$where the ratio of x to y is from 3.0-3.5:1 and where p, q and r represent the molarities of calcium hydroxide or magnesium hydroxide, citric and lactic acids, respectively and where for every 1 mole of p, the molar ratios of q is from 20 to 0.2, and the molar ratio of r is from 0.2 to 20.

Optionally, the complex may be stabilised with a carbohydrate such as sucrose, fructose, maltodextrins, corn syrup, etc.

### DETAILED DESCRIPTION OF THE INVENTION

The present invention is particularly applicable to the fortification of juices and beverages which are clear, so that no gums and other stabilizers are required.

The alkaline calcium source may be, for instance, calcium hydroxide, calcium oxide or calcium carbonate which is conveniently used in suspension or as dry powder. The mixture of lactic and citric acids is conveniently used as a solution especially an aqueous solution.

A metastable Calcium Magnesium Lactate-Citrate complex represents a form of calcium which is considerably more soluble than calcium citrate, minimizing precipitation of salts in calcium fortified beverages. On the other hand, complex formation leads to a decrease of free ionic calcium content, thereby increasing the heat stability of products fortified with calcium, as well as preventing protein coagulation during the heat treatment of beverages such as milk or other dairy based products.

In this invention, it is to be understood that "Citr" denotes the formula ⁻OOC - CH₂ - COH(COO⁻) - CH₂ - COO⁻ , and "Lact" denotes the formula CH₃ - CH(OH) - COO⁻.

The composition of the Calcium Magnesium Lactate-Citrate complex plays an important role in the thermostability and solubility of the product. Lower lactic acid containing complexes are more thermostable and better suited for whole protein based products because of the lower amount of free calcium introduced into the system.

Calcium Magnesium Lactate-Citrate complexes of the present invention are preferably formed by mixing a suspension of the alkaline calcium source, e.g. calcium hydroxide, calcium oxide or calcium carbonate and the magnesium source e.g. magnesium hydroxide with the desired amount of solution of citric and lactic acids. Further, the order of ingredient addition results in the formation of a more stable Calcium Magnesium Lactate-Citrate complex and preferably lactic acid and calcium source are combined together first, then citric acid is added. These complexes possess all the advantages of the previous K₃[CaCitrLact₂] complex described in US Patent No.5,928,691 but have minor or no bitterness due to elimination of the potassium content.

The Calcium-Magnesium Lactate-Citrate complexes of the present invention are preferably formed by mixing a suspension of the alkaline calcium source, e.g. calcium hydroxide, calcium oxide or calcium carbonate with the appropriate quantity of a suspension of the alkaline magnesium source, e.g.magnesium hydroxide, magnesium oxide or magnesium carbonate, and then mixing with the desired amount of solution of citric and lactic acids.

Advantageously, the Calcium-Magnesium Citrate-Lactate complexes may be used in combination with oligosaccharides or oligo- and polysaccharides, such as inulin or hydrolyzed inulin, e.g. Raftilose P95 or Raftilin GR. The amount of oligosaccharides or oligo- and polysaccharides may be from 0.1 to 25%, preferably from 0.2 to 2% and most preferably from 0.5 to 0.7% by weight based on the weight of the complex. This combination of the complex and inulin does not decrease the complex stability (no sediment formation). However, the combination of the metastable complex and inulin brings additional benefits since it has been shown that dietary fiber enhances calcium absorption.

The amount of the complex present in the fortified water, low pH beverage or juice may be from 0.05 to 95%, preferably from 0.1 to 25%, and more preferably from 0.2 to 5% by weight based on the weight of the fortified water, beverage or juice.

The present invention also provides a process of preparing a fortified water, low pH beverage or juice which comprises adding a fortifying amount of a metastable Calcium Magnesium Lactate-Citrate complex formed by the interaction of an alkaline calcium source with a mixture of lactic and citric acids.

Advantageously, carbohydrates may be added to the complex, preferably before the complex is added to the fortified water, low pH beverage or juice. The amount of carbohydrates (sucrose, fructose, maltodextrins, corn syrup, etc.) present in the complex can be 1-80%, preferably from 5.20% by weight based on the weight of the complex. The carbohydrates may also be added to the fortified water, beverage or juice in the form of an aqueous solution or as a dry powder.

The Calcium Magnesium Lactate-Citrate complex can be made in situ. Thus, instead of forming the complex first and then adding it to the ingredients of the complex (an alkaline calcium source and analkaline magnesium source with lactic and citric acids) may be added to the fortified water, low pH beverage or juice to be fortified, either simultaneously or one after the other (while acids should be added first, before addition of the calcium source), where they interact to form the complex. In this embodiment, one or both ingredients may be added in solid form, or as solutions or dispersions to give the fortified water, low pH beverage or juice.

The present invention further provides a process of preparing a fortified, water beverage or juice which comprises adding an alkaline calcium source and an alkaline magnesium source with lactic and citric acids to the foodstuff and forming the complex within the foodstuff.

The following improvements and/or advantages are achieved using the hereinbefore defined complexes to fortify water, beverage or juice as in the present invention.
- Soluble/clear calcium source
- Improved palatability, no bitterness or off-flavor
- Stable without precipitation at refrigeration, room and high (100°F) temperatures
- Heat stable (pasteurization, UHT pasteurization/sterilization)
- Freeze/Thaw resistant
- Decreased free calcium level, so does not cause protein coagulation
- May be prepared in situ
- Calcium hydroxide provides higher level of calcium @ 54.09% (to compare, Calcium Lactate @13.0%)
- Could be used to fortify clear or translucent beverages and semi-liquid food products (e.g., jelly, yogurt, etc.)

### EXAMPLES

The following examples further illustrate the present invention.

### Example 1.

8.9 g of 88% lactic acid solution added to 963 g of water at room temperature and then 8.9 g of citric acid is dissolved in this solution under agitation. The 6.9 g of calcium hydroxide and 3.0 g of magnesium hydroxide are mixed together, then added to the solution of the two acids and mixed for 5-10 minutes until the metastable complex is formed as a clear solution.

### Example 2.

The clear metastable Calcium-Magnesium Lactate-Citrate complex formed in Example 1 was added to water up to a level of 900 mg/L of calcium and 300 mg/L magnesium and no sedimentation occurred over three months storage at low (40°F), room and high (100°F) temperatures. The Calcium-Magnesium fortified water was subjected to freeze/thaw cycles and no sedimentation occurred.

## Claims

1. A composition comprising fortified water, juices, beverages, or other liquid food products and a fortifying amount of a metastable Calcium Magnesium Lactate-Citrate complex formed by the interaction of an alkaline calcium source and an alkaline magnesium source with a mixture of lactic and citric acids and having the formula of ${\text{[(Ca}}_{\text{x}} {\text{Mg}}_{\text{y}} {\text{)}}_{\text{p}} {\text{{}}^{\text{-}} {\text{OOC - CH}}_{\text{2}} {\text{- C(OH)(COO}}^{\text{-}} {\text{) - CH}}_{\text{2}} {\text{- COO}}^{\text{-}} {\text{}}}_{\text{q}} {\text{{CH}}_{\text{3}} \text{- CH(OH) -} {\text{COO}}^{\text{-}} {\text{}}}_{\text{r}} \text{],}$where the ratio of x to y is from 3.0-3.5:1 and where p, q and r represent the molarities of calcium hydroxide or magnesium hydroxide, citric and lactic acids, respectively and where for every 1 mole of p, the molar ratios of q is from 20 to 0.2, and the molar ratio ofr is from 0.2 to 20.

2. A composition according to claim 1 wherein the complex is stabilized with a carbohydrate.

3. A composition according to claim 2 wherein the carbohydrate is sucrose, fructose, glucose, corn syrup, or maltodextrin.

4. A composition according to any preceding claim wherein the juice or beverage is clear.

5. A composition according to any preceding claim wherein the alkaline calcium source is calcium hydroxide, calcium oxide or calcium carbonate.

6. A composition according to any preceding claim wherein the alkaline calcium source and the alkaline magnesium source are used in suspension or as dry powder and the mixture of lactic and citric acids is used as a solution.

7. A composition according to any preceding claim wherein the complex is used in combination with oligosaccharides or oligo- and polysaccharides.

8. A composition according to claim 7 wherein the oligosaccharide or polysaccharide is inulin or hydrolyzed inulin.

9. A composition according to any preceding claim wherein the amount of the complex present in the fortified water, low pH beverage or juice is from 0.05 to 95% by weight based on the weight of the fortified water, low pH beverage or juice.

10. A process of preparing a fortified water, beverage, juice, or other liquid food products which comprises adding a fortifying amount of a metastable Calcium - magnesium Lactate-Citrate complex according to any of claims 1 to 9 formed by the interaction of an alkaline calcium source and an alkaline magnesium source with a mixture of lactic and citric acids.

11. A process according to claim 10 wherein the complex is stabilized with carbohydrates.

12. A process according to claim 11 wherein carbohydrates are added to the complex in an amount of from 1-80% by weight based on the weight of the complex before the complex is added to the fortified water, beverage or juice..

13. A process of preparing a fortified water, beverage, juice or other liquid food products which comprises adding an alkaline calcium source and an alkaline magnesium source with lactic and citric acids to the foodstuff to form a metastable Calcium Magnesium Lactate-Citrate complex in situ within the foodstuff wherein the complex has the formula:- ${\text{[(Ca}}_{\text{x}} {\text{Mg}}_{\text{y}} {\text{)}}_{\text{p}} {\text{{}}^{\text{-}} {\text{OOC - CH}}_{\text{2}} {\text{- C(OH)(COO}}^{\text{-}} {\text{) - CH}}_{\text{2}} {\text{- COO}}^{\text{-}} {\text{}}}_{\text{q}} {\text{{CH}}_{\text{3}} \text{- CH(OH)-} {\text{COO}}^{\text{-}} {\text{}}}_{\text{r}} \text{],}$where the ratio of x to y is from 3.0-3.5:1 and where p, q and r represent the molarities of calcium hydroxide or magnesium hydroxide, citric and lactic acids, respectively and where for every 1 mole of p, the molar ratios of q is from 20 to 0.2, and the molar ratio of r is from 0.2 to 20.

14. A process of preparing a fortified water, juice, beverage or other liquid food products according to claim 10, 11 or 12 wherein the acids one after another or mixture of acids are adding to water, juice, beverage or other liquid first before adding the powder or suspension of calcium and magnesium sources.

## Patentansprüche

1. Zusammensetzung, die angereicherte(s) Wasser, Säfte, Getränke oder andere flüssige Lebensmittelprodukte und eine Anreicherungsmenge eines metastabilen Calcium-Magnesium-Lactat-Citrat-Komplexes umfaßt, der durch die Wechselwirkung einer alkalischen Calciumquelle und einer alkalischen Magnesiumquelle mit einer Mischung aus Milch- und Citronensäure gebildet wird und die Formel aufweist
[(CaₓMg_{y})ₚ{⁻OOC-CH₂-C(OH) (COO⁻) -CH₂-COO⁻}_{q}{CH₃-CH(OH)-COO⁻}ᵣ],
worin das Verhältnis von x zu y von 3,0 bis 3,5:1 beträgt und worin p, q und r die Molaritäten von Calciumhydroxid oder Magnesiumhydroxid und von Citronen- bzw. Milchsäure sind, und wobei für jedes 1 mol p das Molverhältnis von q von 20 bis 0,2 beträgt, und das Molverhältnis von r von 0,2 bis 20 beträgt.

2. Zusammensetzung nach Anspruch 1, wobei der Komplex mit einem Kohlenhydrat stabilisiert ist.

3. Zusammensetzung nach Anspruch 2, wobei das Kohlenhydrat Saccharose, Fructose, Glucose, Maissirup oder Maltodextrin ist.

4. Zusammensetzung nach irgendeinem vorausgehenden Anspruch, wobei der Saft oder das Getränk klar ist.

5. Zusammensetzung nach irgendeinem vorausgehenden Anspruch, wobei die alkalische Calciumquelle Calciumhydroxid, Calciumoxid oder Calciumcarbonat ist.

6. Zusammensetzung nach irgendeinem vorausgehenden Anspruch, wobei die alkalische Calciumquelle und die alkalische Magnesiumquelle in Suspension oder als trockene Pulver verwendet werden und die Mischung aus Milch- und Citronensäure als eine Lösung verwendet wird.

7. Zusammensetzung nach irgendeinem vorausgehenden Anspruch, wobei der Komplex in Kombination mit Oligosacchariden oder Oligo- und Polysacchariden verwendet wird.

8. Zusammensetzung nach Anspruch 7, wobei das Oligosaccharid oder Polysaccharid Inulin oder hydrolysiertes Inulin ist.

9. Zusammensetzung nach irgendeinem vorausgehenden Anspruch, wobei die Menge des in dem angereicherten Wasser, Nieder-pH-Getränk oder Saft vorhandenen Komplexes von 0,05 bis 95 Gew.-%, bezogen auf das Gewicht des angereicherten Wassers, Nieder-pH-Getränk oder Safts beträgt.

10. Verfahren zur Herstellung eines angereicherten Wassers, Getränks, Safts oder anderen flüssigen Lebensmittelprodukts, das die Zugabe einer Anreicherungsmenge eines metastabilen Calcium-Magnesium-Lactat-Citrat-Komplexes nach einem der Ansprüche 1 bis 9 umfaßt, der durch die Wechselwirkung einer alkalischen Calciumquelle und einer alkalischen Magnesiumquelle mit einer Mischung aus Milch- und Citronensäure gebildet ist.

11. Verfahren nach Anspruch 10, wobei der Komplex mit Kohlenhydraten stabilisiert wird.

12. Verfahren nach Anspruch 11, wobei die Kohlenhydrate dem Komplex in einer Menge von 1 bis 80 Gew.-%, bezogen auf das Gewicht des Komplexes, zugegeben werden, bevor der Komplex dem angereicherten Wasser, Getränk oder Saft zugesetzt wird.

13. Verfahren zur Herstellung eines angereicherten Wassers, Getränks, Safts oder anderen flüssigen Lebensmittelprodukts, das die Zugabe einer alkalischen Calciumquelle und einer alkalischen Magnesiumquelle mit Milch- und Citronensäure zu dem Lebensmittel umfaßt, um einen metastabilen Calcium-Magnesium-Lactat-Citrat-Komplex in situ in dem Lebensmittel zu bilden, wobei der Komplex die Formel aufweist
[(CaₓMg_{y})ₚ{⁻OOC-CH₂-C(OH)(COO⁻)-CH₂-COO⁻}_{q}{CH₃-CH(OH)-COO⁻}ᵣ],
worin das Verhältnis von x zu y von 3,0 bis 3,5:1 beträgt und worin p, q und r die Molaritäten von Calciumhydroxid oder Magnesiumhydroxid und von Citronen- bzw. Milchsäure sind, und wobei für jedes 1 mol p das Molverhältnis von q von 20 bis 0,2 beträgt, und das Molverhältnis von r von 0,2 bis 20 beträgt.

14. Verfahren zur Herstellung eines angereicherten Wassers, Safts, Getränks oder anderen flüssigen Lebensmittelprodukts nach Anspruch 10, 11 oder 12, wobei die Säuren dem Wasser, Saft, Getränk oder der anderen Flüssigkeit nacheinander oder in einer Mischung zugesetzt werden, bevor man das Pulver oder die Suspension der Calcium- und Magnesiumquelle zusetzt.

## Revendications

1. Composition comprenant de l'eau, des jus, des boissons ou d'autres produits alimentaires liquides enrichis et une quantité enrichissante de complexe de Lactate-Citrate de Calcium-Magnésium métastable formé par l'interaction d'une source alcaline de calcium et d'une source alcaline de magnésium avec un mélange d'acides lactique et citrique et ayant pour formule :
[(CaₓMg_{y})ₚ {⁻OOC-CH₂-C(OH) (COO⁻)-CH₂-COO⁻}_{q} {CH₃-CH(OH)-COO⁻}ᵣ]
où le rapport entre x et y est de 3.0 - 3.5 :1 et où p, q et r représentent les molarités d'hydroxyde de calcium ou d'hydroxyde de magnésium, d'acide citrique et d'acide lactique, respectivement, et où pour chaque mole de p, le rapport molaire de q est de 20 à 0,2 et le rapport molaire de r est de 0,2 à 20.

2. Composition selon la revendication 1 dans laquelle le complexe est stabilisé avec un hydrate de carbone.

3. Composition selon la revendication 2 dans laquelle l'hydrate de carbone est du saccharose, du fructose, du glucose,' du sirop de mais, ou de la maltodextrine.

4. Composition selon l'une quelconque des revendications précédentes dans laquelle le jus ou la boisson est clair.

5. Composition selon l'une quelconque des revendications précédentes dans laquelle la source alcaline de calcium est de l'hydroxyde de calcium, de l'oxyde de calcium ou du carbonate de calcium.

6. Composition selon l'une quelconque des revendications précédentes dans laquelle la source alcaline de calcium et la source alcaline de magnésium sont utilisées sous forme de suspension ou sous forme de poudre déshydratée et le mélange des acides citrique et lactique est utilisé sous forme de solution.

7. Composition selon l'une quelconque des revendications précédentes dans laquelle le complexe est utilisé en le combinant à des oligosaccharides ou à des oligo- et polysaccharides.

8. Composition selon la revendication 7 dans laquelle l'oligosaccharide ou le polysaccharide est de l'inuline ou de l'inuline hydrolysée.

9. Composition selon l'une quelconque des revendications précédentes dans laquelle la quantité de complexe présente dans l'eau, la boisson à faible pH ou le jus enrichi (e) varie de 0,05 à 95% en poids par rapport au poids d'eau, de boisson à faible pH ou de jus enrichi (e) .

10. Procédé pour la préparation d'une eau enrichie, d'une boisson, d'un jus, ou d'autres produits alimentaires liquides enrichi (s) qui comprend le fait d'ajouter une quantité, servant à l'enrichissement, de complexe de Lactate-Citrate de Calcium-Magnésium métastable selon l'une quelconque des revendications 1 à 9, complexe formé par l'interaction entre une source alcaline de calcium et une source alcaline de magnésium avec un mélange d'acides citrique et lactique.

11. Procédé selon la revendication 10 dans lequel le complexe est stabilisé avec un hydrate de carbone.

12. Procédé selon la revendication 11 dans lequel les hydrates de carbone sont ajoutés au complexe dans une quantité variant de 1 à 80% en poids par rapport au poids de complexe avant que le complexe ne soit ajouté à l'eau, boisson ou jus enrichi(e).

13. Procédé pour la préparation d'une eau, d'une boisson, d'un jus ou d'autres produits alimentaires liquides enrichie(s) qui comprend le fait d'ajouter une source alcaline de calcium et une source alcaline de magnésium avec des acides citrique et lactique à la denrée alimentaire pour former *in situ*, un complexe de Lactate-Citrate de Calcium-Magnésium métastable, dans la denrée alimentaire, le complexe ayant pour formule :
[(CaₓMg_{y})ₚ {⁻OOC-CH₂-C(OH) (COO⁻)-CH₂-COO⁻}_{q} {CH₃-CH(OH)-COO⁻}ᵣ]
où le rapport entre x et y est de 3,0-3,5 : 1 et où p, q et r représentent les molarités d'hydroxyde de calcium ou d'hydroxyde de magnésium, d'acide citrique et d'acide lactique respectivement et où pour chaque mole de p, le rapport molaire de q est de 20 à 0,2 et le rapport molaire de r est de 0,2 à 20.

14. Procédé pour la préparation d'eau, de jus, de boisson ou autres produits alimentaires liquides enrichis selon les revendications 10, 11 et 12 dans lequel les acides, soit l'un après l'autre soit en mélange, sont ajoutés à l'eau, au jus, à la boisson ou à d'autres liquides en premier, avant l'ajout de la poudre ou de la suspension des sources de calcium et de magnésium.
